# EUROPEAN PATENT SPECIFICATION

(11) **EP 1 160 150 B1**
(45) Date of publication and mention of the grant of the patent: **15.06.2005**
(21) Application number: 01201997.2
(22) Date of filing: 17.05.2001
(51) Int. Cl.: B62J 15/02, B62J 21/00

(54) **Dressguard**
Kleiderschutz
Garde-jupe

(30) Priority: 30.05.2000 NL 1015334
(43) Date of publication of application: 05.12.2001
(73) Proprietor: Hesling B.V., 7070 AA Ulft (NL)
(72) Inventor: Kruisselbrink, Herman Jan, 7101 LR Winterswijk (NL); Heukshorst, Leon Nicodemus Jozephus, 7011 EN Gaanderen (NL)
(74) Representative: Van Breda, Jacobus

(56) References cited:
- CH-A- 223 880
- NL-A- 277 250
- NL-A- 8 802 173
- US-A- 2 499 077

## Description

The invention relates to a dress-guard designed for fastening to a mudguard of a (bi)cycle or the like.

From the Dutch patent application No. 9402127 to applicants a device is known for fastening a dress-guard to a mudguard, which device comprises brackets to be fastened to the mudguard. The known dress-guard has a rim designed to extend along the contour of the mudguard. The known device is further provided with at least one flexible, in length adjustable clamping band to be placed over the mudguard, being able to engage at both sides of the mudguard around a peripheral rim of the dress-guard. The clamping band is provided with a plurality of adjustment members distributed over its length for adjustably engaging a counter member. To this end the clamping band is executed as a tension rod having a large number of saw teeth as adjustment members, while the counter member is provided with a locking notch for said saw teeth. When the dress-guard according to the prior art is mounted, it extends along the rim of the mudguard and a number of clamping bands extend visibly over the mudguard for the attachment of the dress-guard.

Both the Dutch patent NL-C-69147 and the Dutch patent NL-C-125980 disclose a dress-guard which is designed for fastening to a mudguard of a (bi)cycle or the like, which for that purpose is provided with at least one hook which is adjustable at right angles to the plane of the dress-guard, between an open position and a closed position, the closed position corresponding with the hook being placed behind a side rim at the inside of the mudguard, the hook being coupled with locking means for fixing the hook in the closed position.

A drawback of the known dress-guard is that it is a rather complicated construction.

It is the object of the invention to provide a dress-guard that is easy to mount, that is a simple construction, and that has no visible fastening means to spoil the outer surface of the mudguard.

To this end the dress-guard according to the invention is characterized in that the hook has a permanent pivoting point located at a rim of the dress-guard, which rim in the mounted condition is able to be positioned against the outside of a side rim of a mudguard.

This dress-guard according to the invention can be manufactured simply and at relatively low costs, while in addition very effectively clamping the dress-guard to the mudguard.

The dress-guard according to the invention may be applied equally advantageously both with plastic and metal mudguards.

It is remarked that from NL-A-277250 which is considered to be the closest prior art and is couched in the pre-amble of independent claim 1 as well as BE-A-534047 the application of a fastening spring is known, which serves to clamp the dress-guard to the mudguard, wherein the fastening spring has a permanent pivoting point at the rim of the dress-guard. This, however, involves a pivoting point that does not allow the fastening spring to move at right angles but parallel to the plane of the dress-guard, which does not result in the same clamping force that can be obtained with the dress-guard according to the invention.

In order to further facilitate the mounting of the dress-guard according to the invention, it is desirable that for operating the hook, the hook be coupled with a lever provided at a side of the pivoting point that faces away from the hook.

Optimal results may then be obtained if the distance the lever extends from the pivoting point is greater than that of the hook.

In another aspect of the invention, the dress-guard is characterized in that the lever possesses a projection that may be snapped behind an inner rim of the dress-guard, which inner rim and projection form the locking means for fixing the hook. This provides a simple and elegant implementation of the locking means, while making it possible, moreover that after the dress-guard is mounted, an optically optimal result is provided without obviously visible elements that provide the fastening of the dress-guard to the mudguard. Alternatively, said visible aspects relating to the parts of the dress-guard that provide the fastening may be deliberately emphasized by means of a suitably differing colour combination.

A further desirable embodiment of the dress-guard according to the invention is characterized in that the projection is spring activated, and in that in the open position of the hook, a free end of the projection abuts the inner rim of the dress-guard. The dress-guard may then be mounted such that with the hook in the open position, the same is held against the mudguard, and that the hook is subsequently moved to the closed position causing the projection due to the power of the spring action to be pushed out of its neutral position until it snaps behind the inside rim of the dress-guard.

The invention will now be further elucidated with reference to the drawing, which
in the Figures 1a and 1b shows a cross-sectional and partial view of the dress-guard according to the invention before mounting and after mounting onto a plastic mudguard; and
in the Figures 2a and 2b shows a cross sectional view of the dress-guard according to the invention before and after mounting onto a metal mudguard.

Similar parts in the Figures carry identical reference numbers.

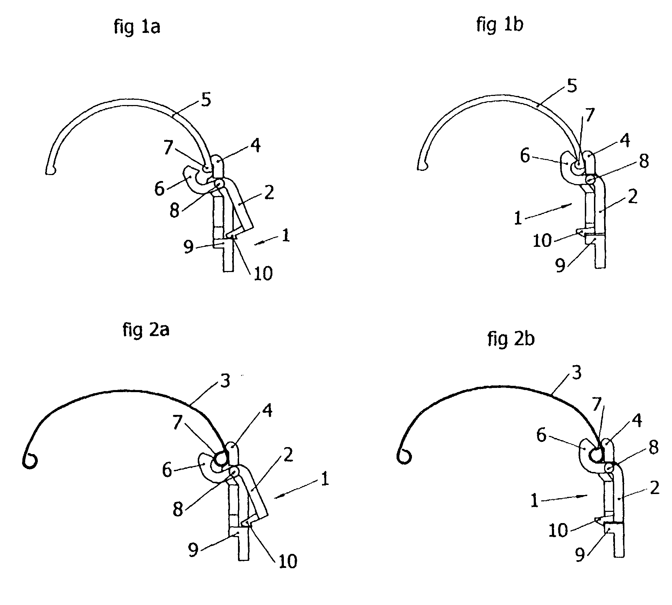

In the Figures, reference number 1 indicates a top portion of a dress-guard, comprising a rim 4 intended to rest on and extend along the contour of a plastic mudguard 5 (Figure 1a/1b) or a metal mudguard 3 (Figure 2a/2b). To this end, the dress-guard 1 is executed to comprise preferably several hooks 6, which are mounted evenly distributed along the rim 4 of the dress-guard 1. For each case, only one such hook 6 is shown in the figures. However, it is well within the capabilities of the person skilled in the art, to choose the number of hooks 6 necessary to adequately fasten the dress-guard 1 to the mudguard 5. The hook 6 may be made of the same material as the dress-guard 1, especially the rim 4, but it is also possible to use a different type of material or to give the hook 6 another colour to the rest of the dress-guard 1. According to the invention, the hook 6 may assume an open position, as shown in the Figures 1a and 2a, and a closed position as shown in the Figures 1b and 2b. The closed position according to Figures 1b and 2b corresponds with a positioning in which the hook 6 falls behind a side rim 7 at the inside of the mudguard 3, 5. The hook 6 is coupled with the dress-guard 1 in such a manner that the same has a pivoting point 8 about which the hook 6 is able to pivot over at least a circle segment between the open position and the closed position. The pivoting point 8 is near to a rim 4 of the dress-guard 1, which rim 4 in the mounted position is placed to abut the outside of the side rim 7 the of the mudguard 3, 5. For operating the hook 6, the hook 6 is further preferably coupled with a lever 2 placed at a side of the pivoting point 8 that faces away from the hook 6. As can be clearly seen from the figures, the distance the lever 2 extends from the pivoting point 8 is greater than that of the hook itself. In this way little strength is required for mounting the dress-guard 1 to the mudguard 3, 5.

As is clearly shown in the figures, the lever 2 is preferably provided with a projection 10 for snapping behind the inner rim 9 of the dress-guard 1, which engage to form a locking means for fixing the hook 6 in the closed position as shown in Figures 1b and 2b. Preferably, the projection 10 is spring-activated such that in the open position of the hook 6 shown in these Figures, a free end of the projection 10 abuts the inner rim 9 of the dress-guard 1.

It will be clear that the above elucidation relates to just one possible embodiment of the dress-guard according to the invention and the fastening system applied therein. Many variations and modifications are feasible within the framework of the invention without departing from the inventive idea as depicted in the appended claims.

It is remarked that the construction of the dress-guard according to the invention may be such that in a pre-mounting step, the hook 6 and the lever 2 coupled thereto, are snapped around pivoting point 8 on the rim 4 of the dress-guard 1. In the embodiment shown, the hook 6 remains after pre-mounting in the open position, due to the free end of the projection 10 abutting the inner rim 9 of the dress-guard 1. For mounting, the lever 2 can be pushed inward against the spring action of the projection 10, to effectuate the snap-on connection of the projection 10 with the inner rim 9 of the dress-guard 1. The dress-guard itself may have any chosen form, including a double curve fabricated, for example, by means of injection moulding.

## Claims

1. A dress-guard (1) designed for fastening to a mudguard (3, 5) of a (bi)cycle or the like, provided with at least one hook (6) which is adjustable at right angles to the plane of the dress-guard (1), between an open position and a closed position the closed position corresponding with the hook (6) capable of being placed behind a side rim (7) at the inside of a mudguard (3, 5), the hook being coupled with locking means for fixing the hook (6) in the closed position, **characterized in that** the hook (6) has a permanent pivoting point (8) located at a rim (4) of the dress-guard (1), which rim (4) in the mounted condition is able to be positioned against the outside of a side rim (7) of a mudguard (3, 5).

2. A dress-guard according to claim 1, **characterized in that** for operating the hook (6), the hook (6) is coupled with a lever (2) provided at a side of the pivoting point (8) that faces away from the hook (6)

3. A dress-guard according to claims 1 or 2, **characterized in that** the lever (2) possesses a projection (10) that may be snapped behind an inner rim (9) of the dress-guard (1), which inner rim (9) and projection (10) form the locking means for fixing the hook.

4. A dress-guard according to claim 3, **characterized in that** the projection (10) is spring activated, and **in that** in the open position of the hook (6), a free end of the projection (10) abuts the inner rim (9) of the dress-guard (1).

5. A dress-guard according to one of the claims 2-4, **characterized in that** the distance the lever (2) extends from the pivoting point (8) is greater than that of the hook (6).

## Patentansprüche

1. Ein Kleiderschutz (1), der zum Befestigen an einem Schutzblech (3, 5) eines (Zwei-) Rads oder dergleichen entworfen ist, der mit zumindest einem Haken (6) versehen ist, der in rechten Winkeln zu der Ebene des Kleiderschutzes (1) zwischen einer offenen Position und einer geschlossenen Position einstellbar ist, wobei die geschlossene Position dem entspricht, dass der Haken (6) hinter einen Seitenrand (7) an der Innenseite des Schutzblechs (3, 5) platziert werden kann, wobei der Haken mit einer Verriegelungseinrichtung zum Befestigen des Hakens (6) in der geschlossenen Position gekoppelt ist, **dadurch gekennzeichnet, dass** der Haken (6) einen permanenten Schwenkpunkt (8) aufweist, der an einem Rand (4) des Kleiderschutzes (1) angeordnet ist, wobei der Rand (4) in dem befestigten Zustand gegen die Außenseite eines Seitenrands (7) eines Schutzblechs (3, 5) positioniert werden kann.

2. Ein Kleiderschutz gemäß Anspruch 1, **dadurch gekennzeichnet, dass** zum Betreiben des Hakens (6) der Haken (6) mit einem Hebel (2) gekoppelt ist, der an einer Seite des Schwenkpunkts (8) vorgesehen ist, die dem Haken (6) abgewandt ist.

3. Ein Kleiderschutz gemäß Anspruch 1 oder 2, **dadurch gekennzeichnet, dass** der Hebel (2) einen Vorsprung (10) aufweist, der hinter einen Innenrand (9) des Kleiderschutzes (1) einschnappen kann, wobei der Innenrand (9) und der Vorsprung (10) die Verriegelungseinrichtung zum Befestigen des Hakens bilden.

4. Ein Kleiderschutz gemäß Anspruch 3, **dadurch gekennzeichnet, dass** der Vorsprung (10) durch Federkraft betätigt wird und dass in der offenen Position des Hakens (6) ein freies Ende des Vorsprungs (10) an den Innenrand (9) des Kleiderschutzes (1) anstößt.

5. Ein Kleiderschutz gemäß einem der Ansprüche 2 bis 4, **dadurch gekennzeichnet, dass** der Abstand, um den sich der Hebel (2) von dem Schwenkpunkt (8) erstreckt, größer ist als derjenige des Hakens (6).

## Revendications

1. Pare-jupe (1) conçu pour être fixé à un garde-boue (3, 5) d'un cycle ou d'une bicyclette ou analogue, pourvu d'au moins un crochet (6) qui est réglable perpendiculairement au plan du pare-jupe (1), entre une position ouverte et une position fermée, la position fermée correspondant au crochet (6) conçu pour être placé derrière une jante latérale (7) sur l'intérieur d'un garde-boue (3, 5), le crochet étant couplé avec un moyen de verrouillage pour fixer le crochet (6) dans la position fermée, **caractérisé en ce que** le crochet (6) a un point de pivotement (8) permanent situé sur une jante (4) du pare-jupe (1), laquelle jante (4) à l'état monté est adaptée à être positionnée contre l'extérieur d'une jante latérale (7) d'un garde-boue (3, 5).

2. Pare-jupe selon la revendication 1, **caractérisé en ce que** pour actionner le crochet (6), le crochet (6) est couplé avec un levier (2) situé sur un côté du point de pivotement (8) qui donne loin du crochet (6).

3. Pare-jupe selon la revendication 1 ou 2, **caractérisé en ce que** le levier (2) possède une saillie (10) qui peut être encliquetée derrière une jante interne (9) du pare-jupe (1), laquelle jante interne (9) et laquelle saillie (10) forment le moyen de verrouillage pour fixer le crochet.

4. Pare-jupe selon la revendication 3, **caractérisé en ce que** la saillie (10) est actionnée par ressort, et **en ce que** dans la position ouverte du crochet (6), une extrémité libre de la saillie (10) bute contre la jante interne (9) du pare-jupe (1).

5. Pare-jupe selon l'une quelconque des revendications 2 à 4, **caractérisé en ce que** la distance sur laquelle le levier (2) s'étend depuis le point de pivotement (8) est supérieure à celle du crochet (6).
